# EUROPEAN PATENT APPLICATION

(11) **EP 2 582 013 A2**
(43) Date of publication of application: **17.04.2013**
(21) Application number: 12179834.2
(22) Date of filing: 09.08.2012
(51) Int. Cl.: H02J 15/00, H02J 3/00, H02J 7/00, H02J 9/06, B60L 7/00, B60W 10/00

(54) **Energy storage system and control method**

(30) Priority: 10.10.2011 US 201161545388 P; 31.07.2012 US 201213562693
(71) Applicant: Samsung SDI Co., Ltd., Gyeonggi-do (KR)
(72) Inventor: Park, Jong-Ho, Gyeonggi-do (KR)
(74) Representative: Walaski, Jan Filip

(57) **Abstract**

The present invention relates to an energy storage system and controlling method of the same reducing power consumption and increasing inverter efficiency by providing a plurality of inverters in parallel and selectively driving inverters according to power requirements of the load. The energy storage system of the present invention supplies power to a load by connecting the power generation system to a grid, and the system includes a plurality of inverters connected in parallel converting direct current voltage output by the power generation system into alternating current voltage of the grid; a plurality of switches respectively separately connected in correspondence with the plurality of inverters; and a controller controlling turn on/off of the plurality of switches and driving at least one of the inverters connected to each switch.

## Description

The present invention relates to an energy storage system and, particularly, to the energy storage system and a method of controlling the same provided with a plurality of inverters.

As environmental degradation, resource depletion, etc. become a problem, there is greater and greater interest in systems storing power and capable of efficiently utilizing the stored power. Further, the importance of renewable energy that uses infinitely supplied natural resources such as solar, wind, tidal, etc. and does not cause pollution in the power generation process is increasing.

An energy storage system is a system connecting renewable energy sources, a battery storing power, and the existing grid power, and much research and development for such systems is being carried out.

However, a prior energy storage system includes only one inverter provided with a rated capacity for a system. For example, a 3kW system can output up to 3kW at the unloaded state according to the power consumption of the load, which leads to lower efficiency and increased power consumption when the load is small.

An advantage of some aspects of the invention is that it provides an energy storage system and controlling method of the same reducing power consumption of the system and increasing inverter efficiency by providing a plurality of inverters in parallel and selectively driving the inverters according to the power requirements of the load.

According to an aspect of the invention, there is provided an energy storage system for driving a load, the system including a plurality of inverters switchably connected in parallel for converting a DC voltage into AC voltage to be supplied to the load and a controller for selectively connecting one or more of the plurality of inverters to the load in dependence on the power requirements of the load.

The DC voltage may be provided by a battery in the energy storage system or by a power generation system connected to the energy storage system.

The energy storage system may further include a plurality of switches corresponding to the plurality of inverters, each switch being arranged to connect the DC voltage to a respective one of the plurality of inverters, wherein the controller is arranged to control the plurality of switches.

The energy storage system may further include a power measuring unit for calculating the power consumption of the load and for supplying the calculated value to the controller as the power requirements of the load.

The energy storage system may further include a power predicting unit for predicting the power requirements of the load.

The controller may be arranged to determine which of the inverters are required to be turned on to provide a power output that meets the power requirements of the load. The controller may be arranged to compare the power requirements of the load with one or more thresholds to determine which of the inverters are required to be turned on.

The inverters may have substantially equal rated capacity, and the controller may be arranged to increase the number of inverters as the power requirements of the load increase.

Alternatively, the inverters may have different rated capacities, and the controller may be arranged to select the inverters for which the sum of the rated capacities is the lowest sum that meets the power requirements of the load.

The controller may include a load information receiving unit for receiving information about the power requirements of the load and a switch controller for controlling on/off operation of the plurality of switches connected to each of the inverters to select at least one of the plurality of inverters based on the received load information.

The energy storage system may further comprise a DC link unit connected to the power generation system to maintain the level of a DC voltage provided by the power generation system, wherein the plurality of switches are connected between the inverters and the DC link unit.

According to the invention, there is further provided a method of controlling an energy storage system comprising selectively connecting one or more of a plurality of inverters to a load in dependence on the power requirements of the load.

The accompanying drawings, together with the specification, illustrate exemplary embodiments of the present invention, and, together with the description, serve to explain the principles of the present invention.
FIG.1 is a block view showing configurations of an energy storage system according to an exemplary embodiment of the invention.
FIG. 2 is a block view schematically showing configurations of a controller shown in FIG. 1.
FIG. 3 is a flow chart showing a controlling method of the energy storage system according to an exemplary embodiment of the invention.

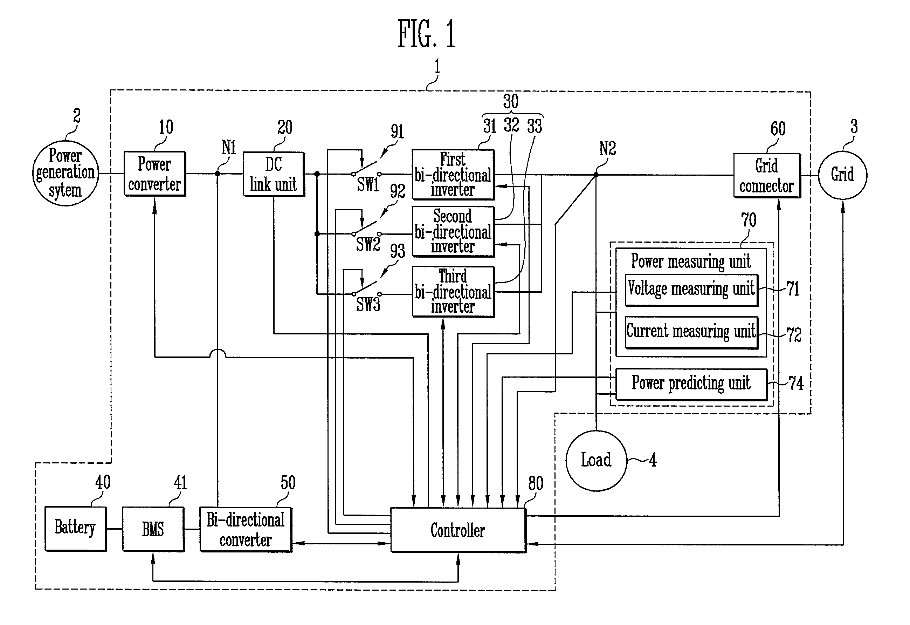

In FIG. 1, the energy storage system 1 according to an exemplary embodiment of the invention is connected to a power generation system 2 and a grid 3 to supply power to load 4.

The energy generation system 2 is the system producing power using an energy source. The power generation system 2 supplies the produced power to the energy storage system 1. The power generation system 2 is, for example, a photovoltaic system, a wind power system and a tidal generation system, and may include the whole power generation system producing the power using new regeneration energy such as solar heat or geothermal heat.

Particularly, solar cells producing electric energy are easy to install to each home or factory and the like and therefore, are suitable for applying to the energy storage system 1 scattered to each home. The power generation system 2 includes a plurality of power generation modules in parallel to form a high-capacity energy system by producing the power by the power generation modules.

The grid 3 includes a power plant, a substation, power line, etc. When the grid 3 is in a normal state, the grid 3 supplies the power to the energy storage system 1 or the load 4 and receives the power supplied from the energy storage system 1. When the grid 3 is in an abnormal state, power supply from the grid 3 to the energy storage system 1 or the load 4 is stopped, and the power supply from the energy storage system 1 to the grid 3 is also stopped.

The load 4 consumes the power produced from the power generation system 2, the power stored in the battery 40 or the power supplied from the grid 3, and for example, may be home, factory, etc.

The energy storage system 1 stores the power generated by the power generation system 2 into a battery 40 and may transfer the generated power into the grid 3. Further, the energy storage system 1 transfers the power stored in the battery 40 into the grid 3, or may store the power supplied from the grid 3 into the battery 40. Further, the energy storage system 1 may supply the power to the load 4 by performing UPS (Uninterruptible Power Supply) operation in an abnormal situation, for example, when power outages of the grid 3 are triggered, and may supply the power generated by the power generation system 2 or the power stored in the battery 40 to the load 4 also when the grid 3 is in the normal state.

The energy storage system 1 includes a power converter 10, a DC link unit 20, inverters 30, a battery 40, a BMS (Battery Management System)(41), converter 50, a grid connector 60, a power measuring unit 70, a power predicting unit 74 and a controller 80.

In this case, it is preferable that the inverters 30 and the converter 50 are implemented with the bi-directional inverters 30 and the bi-directional converter 50. The embodiment shown in FIG.1 includes, for example, the bi-directional inverters 30 and the bi-directional converter 50.

Embodiments of the invention include a plurality of bi-directional inverters (30) connected in parallel, and a plurality of switches (91 to 93) formed between each of the bi-directional inverters (30) and the DC link unit 20.

In one embodiment of the invention, the bi-directional inverters (30) are implemented by first to third bi-directional inverters (31, 32, 33), but the number of inverters is not limited to this.

The power converter 10 is connected between the power generation system 2 and a first node N1, and converts the power produced by the power generation system 2 into DC voltage of the first node N1. An operation of the power converter 10 is varied according to the power generated by the power generation system 2. For example, when the power generation system 2 generates AC voltage, the power converter 10 converts the AC voltage into DC voltage of the first node N1. Further, when the power generation system 2 generates DC voltage, the power converter 10 boosts or reduces down the DC voltage into DC voltage of the first node N1.

For example, when the power generation system 2 is a photovoltaic system, the power converter 10 may be an MPPT (maximum power point tracking) converter detecting the maximum power point according to solar flux change or temperature change by solar heat, and producing the power. In addition, the power converter 10 uses various types of converter or rectifier.

The DC link unit 20 is connected between the first node N1 and the bi-directional inverters 30 to maintain direct current link voltage Vlink of the first node N1 regularly.

The voltage level of the first node N1 may be unstable due to instantaneous voltage drop of the power generation system 2 or the grid, peak load generation at the load 4 and the like. However, the voltage of the first node N1 needs to be maintained regularly to stably operate the bi-directional inverters 30 and bi-directional converters 50. To this end, the DC link unit 20 may use capacitors such as, for example, aluminum electrolytic capacitors, high voltage polymer capacitors, high voltage and current MLCCs (Multi Layer Ceramic Capacitor) and the like.

The battery 40 receives and stores the power produced by the power generation system 2 or the power of the grid 3, and supplies the stored power to the load 4 or the grid 3. The battery 40 is configured by at least one battery cells, and each battery cell may include a plurality of bare cells. The battery 40 may be implemented by various types of the battery cells, for example, nickel-cadmium battery, lead storage battery, NiMH (nickel metal hydride battery), lithium ion battery, lithium polymer battery etc.

The battery 40 may determine the number thereof according to power capacity, design conditions and the like required at the energy storage system 1. For example, when power consumption of the load 4 is large, it is possible to provide a plurality of batteries 40, and when the power consumption of the load 4 is small, it is possible to provide a battery 40 only.

A BMS 41 is connected to the battery 40, and controls charging and discharging operations of the battery 40 according to control of the controller 80. The BMS 41 may perform overcharge protection function, overdischarge protection function, overcurrent protection function, overvoltage protection function, overheat protection function, cell balancing function, etc. to protect the battery 40. To this end, BMS 41 monitors voltage, current, temperature, the remaining power amount, lifespan, charging state and the like of the battery 40, and may transmit the relevant information to the controller 80. Although BMS 41 and the battery 40 are separate in the present embodiment, it is of course possible to configure as the battery pack in which the BMS 41 is integrated with the battery 40.

The bi-directional converter 50 DC-DC converts the voltage of the power output from the battery 40 into the voltage level, that is, direct current link voltage Vlink required by the bi-directional inverters 30. In addition, the bi-directional converter 50 DC-DC converts charging power introduced through the first node N1 into the voltage level required by the battery 40. Here, the charging power is, for example, the power produced by the energy generation system 2 or the power supplied through the bi-directional inverters 30 from the grid 3.

The bi-directional inverters 30 are power converters formed between the first node N1 and the second node N2 connected to the load 4 or the grid connector 60. The bi-directional inverters 30 convert and output the direct current link voltage Vlink output from the energy generation system 2 or the battery 40 into alternating current voltage of the grid 3. Further, the bi-directional inverters 30 rectifies the alternating voltage of the grid 3, and converts and outputs the rectified alternating voltage into the direct current link voltage Vlink to store the power of the grid 3 in the battery 40. The bi-directional inverters 30 may include filters for removing harmonics from the alternating voltage output to the grid 3, and PLL (Phase Locked Loop) circuit synchronizing phase of the alternating voltage output from the bi-directional inverters 30 with phase of the alternating voltage of the grid 3 to suppress generation of reactive power. In addition, the bi-directional inverters 30 may perform functions such as voltage fluctuation range limits, power factor correction, DC component removal, transient phenomena protection and the like.

The existing energy storage system is configured by a single bi-directional inverter, thereby lowering inverting efficiency when the power consumption of the load, that is, the load amount, are small and increasing the amount of electricity used by the system devices.

To overcome the above shortcomings, embodiments of the invention are implemented with a plurality of bi-directional inverters connected in parallel, rather than the existing single bi-directional inverter, and selectively drive the inverters 31, 32, 33 according to the power consumption of the load 4 to use each output up to the maximum, thereby implementing high efficiency by maximally using each output and reducing power consumption of the whole system by varying power consumption of the system according to the load.

Here, each of the bi-directional inverters 31, 32, 33 and switches 91, 92, 93 are controlled by the controller 80. For illustration purposes, hereinafter, the maximum power consumption of the load 4 is set to be 3kW, and for example, three bi-directional inverters and switches, respectively, are described, but the embodiments of the invention are not limited thereto.

The grid connector 60 is connected between the power grid 3 and the bi-directional inverter 30. When the power grid 3 is in abnormal situation, the grid connector 60 blocks connection of the energy storage system 1 and the power grid 3 under control of the controller 80.

The grid connector 60 is configured by switching devices such as junction transistor (BJT), field effect transistor (FET) etc.

Although not shown, switches may be further connected between the bidirectional inverter 30 and the load 4. The switch is connected to the grid connector 60 in series, and blocks the power flowing into the load 4 under control of the controller 80. The switch uses, for example, junction transistor (BJT), field effect transistor (FET) etc.

The power measuring unit 70 measures load amounts, that is, the power consumption of the load 4. The power measuring unit 70 includes a voltage measuring unit 71 measuring voltage applied to the load 4 to measure the load amounts, and a current measuring unit 72 measuring current to be supplied to the load 4, and may calculate the power consumption of the load 4 by multiplying each of the measured voltage value and current value.

At this time, the measured voltage value and current value are transmitted to the controller 80, or the load amount, that is, the power consumption of the load 4 is calculated, and the calculated value may be transmitted to the controller 80. That is, calculation of the load amount of the load 4 may be performed in the power measuring unit 70 or the controller 80.

Further, a power predicting unit 74, that predicts the load amounts, that is, the power consumption of the load 4, stores power consumption data of the load 4 (for an example, the load power consumption data for the past year) as a look up table type, and may predict the power consumption of the load 4 based on the power consumption data.

In FIG. 1, the power measuring unit 70 and the power predicting unit 74 are configured separately, but it is possible to integrate the power measuring unit 70 and the power predicting unit 74. For an example, a smart meter may implement operations of both of the power measuring unit and the power predicting unit.

Therefore, the embodiment of the present invention is characterized by selectively driving the inverters 31, 32, 33 corresponding to the load amount of the load measured by the power measuring unit 70 or estimated load amounts of the load, that is, the power requirements of the load calculated by the power predicting unit 74.

The controller 80 monitors a state of the power generation system 2, the grid 3, the battery 40, and the load 4, and controls the power converter 10, the bi-directional inverter 30, the BMS 41, the bi-directional converter 50, the grid connector 60 according to the result of the monitoring.

Further, the controller 80 receives the load amounts of the load 4 measured by the power measuring unit 70, or receives the voltage value and the current value of the load, and calculates the load amounts of the load 4 by multiplying the voltage value and the current value.

Further, the controller 80 may receive the estimated load amounts of the load 4 calculated by the power predicting unit 74.

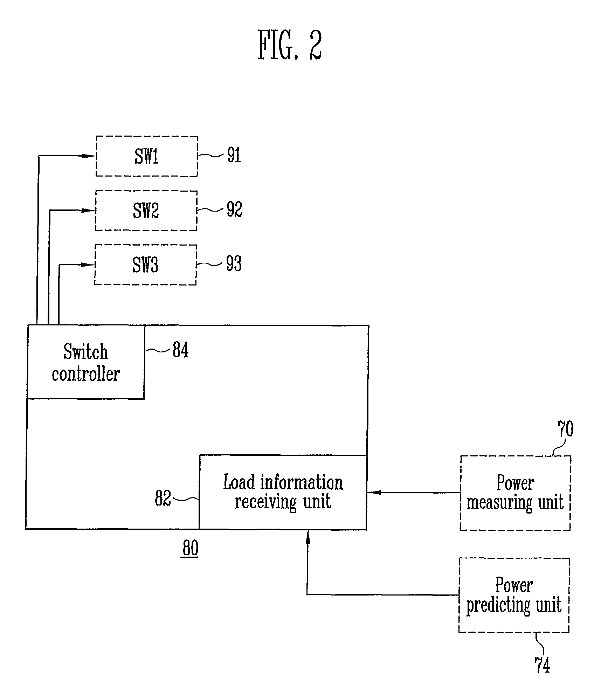

That is, in FIG. 1 and FIG. 2, the controller 80 according to an embodiment of the invention includes a load information receiving unit 82 receiving the voltage value and the current value of the load or the power consumption of the load 4, that is, the value of the load amount as load information of the load 4 measured by the power measuring unit 70 and receiving the estimated load amounts of the load 4 calculated by the power predicting unit 74, and a switch controller 84 controlling operation of the plurality of switches 91, 92, 93 connected to each of the bi-directional inverters 31, 32, 33 to select at least one of the plurality of bi-directional inverters provided in parallel based on the received load information.

Therefore, the controller 80 according to an embodiment of the invention controls the operation of the plurality of first to third bi-directional inverters 31, 32, 33 connected in parallel according to the load information of the load 4, and the first to third switches 91, 92, 93 provided in correspondence to each of the bi-directional inverters to selectively drive the bi-directional inverters.

In the above described embodiments, the plurality of bi-directional inverters 31, 32, 33 have the same rated capacity, but may be implemented to have different rated capacities.

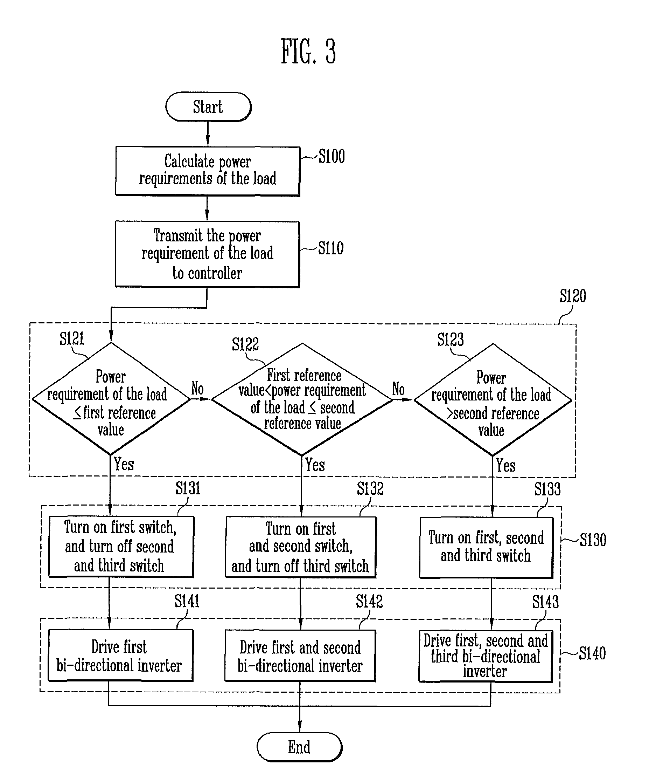

First, the operations of the plurality of bi-directional inverters that have the same rated capacity (for example, 1kW) is as follows, and a specific controlling method about the operations is described in FIG. 3.

As an example, if the power requirements of the load 4, that is, measured load amount or the estimated load amount of the load is below 1kW, a switch, that is, a first switch 91 is turned on, and the remaining second and third switches 92, 93 are turned off. That is, the first bi-directional inverter 31 connected to the first switch 91 is driven, and the second and third bi-directional inverters 32, 33 connected to the second and third switches 92, 93 are not operated.

Further, if the power requirements of the load 4 are larger than 1kW and smaller than 2kW, two switches, that is, the first and second switches 91, 92 are turned on, and the remaining third switch 93 is turned off. That is, the first and second bi-directional inverters 31, 32 connected to the first and switches 91, 92 are driven, and the third bi-directional inverter 33 connected to the third switch 93 is not operated.

Finally, if the power requirements of the load 4 are larger than 2kW, all the switches, that is, the first, second and third switches 91, 92, 93 are turned on, and all the first, second and third bi-directional inverters 31, 32, 33 connected thereto are driven.

High efficiency is implemented by maximally using output of the bi-directional inverters having small capacity as compared with the single bi-directional inverter provided in the existing system.

That is, differing loads can be serviced by using different numbers of inverters without having to use a highly rated single inverter to provide a fraction of its rated power with low efficiency.

However, if the rated capacity of all the bi-directional inverters 31, 32, 33 is the same, that is, 1kW, for an example, if the power requirements of the load is larger than 1kW and smaller than, for example, 1.3 kW, there is an disadvantage in that the efficiency of the inverter is somewhat decreased, in that inverters with rated capacity of 2kW need to be provided.

In another embodiment of the present invention, such a disadvantage may be overcome by setting the rate capacities of the bi-directional inverters differently from each other.

That is, for example, the rated capacity of the first bi-directional inverter 31 may be set to 0.5kW, the rated capacity of the second bi-directional inverter 32 may be set to 1kW, and the rated capacity of the third bi-directional inverter 33 may be set to 2kW, thereby selectively driving the plurality of inverters in correspondence to the load amounts of the load in a wide range and therefore, minimizing efficiency decline of the inverters.

In more detail, if the power requirements of the load 4, that is, the measured load amount or the estimated load amount of the load is below 0.5Kw, a first switch 91 turns on, and the other of a second and a third switches 92, 93 turn off. That is, the first bi-directional inverter 31 connected to the first switch 91 is driven, and the second and third bi-directional inverters 32, 33 connected to the second and third switches 92, 93 are not driven.

Further, if the power requirements of the load of the load 4 are above 0.5kW and below 1kW, the second switch 92 turns on, and the other of the first and third switches 91, 93 turn off. That is, the second bi-directional inverter 32 connected to the second switch 92 is driven, and the first and third bi-directional inverters 31, 33 connected to the first and third switches 91, 93 are not driven.

Further, if the power requirements of the load of the load 4 are above 1kW and below 1.5kW, the first and second switches 91, 92 turn on, and the third switch 93 turns off. That is, the first and second bi-directional inverters 31, 32 connected to the first and second switches 91, 92 are driven, and the third bi-directional inverter 33 connected to the third switch 93 is not driven.

Further, if the power requirements of the load of the load 4 are above 1.5kW and below 2kW, the third switch 93 turns on, and the other of the first and second switches 91, 92 turn off. That is, the third bi-directional inverter 33 connected to the third switch 93 is driven, and the first and second bi-directional inverters 31, 32 connected to the first and second switches 91, 92 are not driven.

Further, if the power requirements of the load of the load 4 are above 2kW and below 2.5kW, the first and third switches 91, 93 turn on, and the second switch 92 turns off. That is, the first and third bi-directional inverters 31, 33 connected to the first and third switch 91, 93 are driven, and the second bi-directional inverter 32 connected to the second switch 92 is not driven.

Further, if the power requirements of the load of the load 4 are above 2.5kW and below 3kW, the second and third switches 92, 93 turn on, and the first switch 92 turns off. That is, the second and third bi-directional inverters 31, 33 connected to the second and third switch 92, 93 are driven, and the first bi-dirctional inverter 31 connected to the first switch 91 is not driven.

Finally, if the power requirements of the load of the load 4 are above 3kW, all switches, that is, the first, second and third switches 91, 92, 93 turn on, and the first, second and third bi-directional inverters 31, 32, 33 connected to the first, second and third switch 91, 92, 93 are driven.

Further, in this embodiment of the invention, the power consumption may be varied according to the load, and therefore, there is an advantage that the system power consumption amount as compared with the existing system is reduced.

That is, as an example, when considering the system power consumption in connection with system heat side, P (heat)= I² (current) * R (resistance). When current-amount becomes twice, heating value becomes four times. Comparing when using a single inverter with when using one of three (similarly rated) inverters, the difference in the current amount therebetween is 3 times, that is, 9 times the maximum heating value, which leads to a large loss in terms of heat generation side.

Therefore, when using the plurality of inverters like embodiments of the invention, the heating value is reduced, such that cost for heating reduction measures, for example, providing a heat sink, may be reduced.

However, the controller 80 monitors the state of the power generation system 2, the grid 3, the battery 40, and the load 4, and also performs the operation controlling the BMS 41, the bi-directional inverter 30, the bi-directional converter 50, and the grid connector 60, but configurations for these are omitted for convenience.

FIG. 3 is a flow chart showing a controlling method of the energy storage system according to an exemplary embodiment of the invention wherein, for example, the rated capacities of the bi-directional inverters 31, 32, 33 are the same, that is, 1kW.

In FIG. 1 to 3, first, the power measuring unit 70 measures voltage to be applied to the load 4 and current to be supplied to the load 4, or the power predicting unit 74 predicts the load amount, that is, the power consumption, or power requirements of the load.

Further, the power measuring unit 70 may calculate the load amount of the load 4 by multiplying each of the measured voltage value and current value.

At this time, the measured voltage value and current value are transmitted to the controller 80, or the load amount of the load 4 is calculated, and the calculated value may be transmitted to the controller 80. That is, calculation of the load amount of the load 4 may be performed by the power measuring unit 70 or the controller 80.

That is, the load amount of the load 4 measured by the power predicting unit 74 or the power requirements of the load as the estimated load amount of the load 4 predicted by the power predicting unit 74 is calculated (S100).

Next, the power requirements of the calculated load are transmitted to the controller 80 (S110).

That is, the controller 80 receives the load amount of the load 4 measured by the power measuring unit 70 and/or information for the estimated load amounts of the loads 4 predicted by the power predicting unit 74.

Hereinafter, the controller 80 compares the power requirements of the load 4 with reference values (S120), and controls the operation of the plurality of first to third bi-directional inverters 31, 32, 33 connected in parallel based on the compared value and the first to third switch 91, 92, 93 provided in correspondence to each of the bi-directional inverters (S130) to selectively drive the bi-directional inverters (S140).

It is preferable that the reference values are set to be smaller than the rated capacity of the bi-directional inverters.

As an example, if the power requirements of load amount of the load 4 is below a first reference value (for example, 900W) (S121), a switch, that is, a first switch 91 is turned on, and the remaining second and third switch 92, 93 are turned off. That is, the first bi-directional inverter 31 connected to the first switch 91 is driven, and the second and third bi-directional inverters 62, 63 connected to the second and third switch 32, 33 are not operated (S141).

Further, if the power requirements of the load 4 is larger than the first reference value and smaller than the second reference value (for example, 1800W) (S122), two switches, that is, the first and second switch 91, 92 are turned on, and the remaining third switch 93 is turned off (S132). That is, the first and second bi-directional inverters 31, 32 connected to the first and second switch 91, 92 are driven, and the third bi-directional inverter 63 connected to the third switch 33 is not driven (S142).

Next, if the power requirements of the load 4 are larger than the second reference value (S123), all the switches, that is, the first, second and third switch 91, 92, 93 are turned on (S133), and all the first, second and third bi-directional inverters 31, 32, 33 connected thereto are driven (S143).

Output of the bi-directional inverters having small capacity as compared with the single bi-directional inverter provided in the existing system by above operations may be used to the maximum, thereby implementing high efficiency, varying the power consumption according to the load and therefore, reducing the system power consumption amount as compared with the existing system.

The present invention provides a plurality of inverters and selectively drives the plurality of inverters connected in parallel according to power requirements of the load, thereby implementing high efficiency by maximally using each output and reducing power consumption of the whole system by varying power consumption of the system according to the load.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. An energy storage system (1) for driving a load (4), the system (1) including:
a plurality of inverters (30) switchably connected in parallel for converting a DC voltage into AC voltage to be supplied to the load; and
a controller (80) for selectively connecting one or more of the plurality of inverters to the load in dependence on the power requirements of the load.

2. The energy storage system of claim 1, wherein the DC voltage is provided by a battery in the energy storage system or by a power generation system (2) connected to the energy storage system.

3. The energy storage system of claim 1 or 2, further comprising a plurality of switches (91, 92, 93) corresponding to the plurality of inverters (31, 32, 33), each switch being arranged to connect the DC voltage to a respective one of the plurality of inverters;
wherein the controller is arranged to control the plurality of switches.

4. The energy storage system of any one of the preceding claims, further comprising a power measuring unit (70) for calculating the power consumption of the load and for supplying the calculated value to the controller as the power requirements of the load.

5. The energy storage system of any one of the preceding claims, further comprising a power predicting unit (74) for predicting the power requirements of the load.

6. The energy storage system of any one of the preceding claims, wherein the controller is arranged to determine which of the inverters are required to be turned on to provide a power output that meets the power requirements of the load.

7. The energy storage system of claim 6, wherein the controller is arranged to compare the power requirements of the load with one or more thresholds to determine which of the inverters are required to be turned on.

8. The energy storage system of any one of the preceding claims, wherein the inverters have substantially equal rated capacity, and the controller is arranged to increase the number of inverters as the power requirements of the load increase.

9. The energy storage system of any one of claims 1 to 7, wherein the inverters have different rated capacity, and the controller is arranged to select the inverters for which the sum of the rated capacity is the lowest sum that meets the power requirements of the load.

10. The energy storage system of any one of the preceding claims when dependent on claim 3, wherein the controller (80) includes a load information receiving unit (82) for receiving information about the power requirements of the load; and
a switch controller (84) for controlling on/ off operation of the plurality of switches connected to each of the inverters to select at least one of the plurality of inverters based on the received load information.

11. The energy storage system of any one of the preceding claims when dependent on claim 3, further comprising a DC link unit connected to the power generation system to maintain the level of a DC voltage provided by the power generation system, wherein the plurality of switches are connected between the inverters and the DC link unit.

12. A method of controlling an energy storage system (1) according to any one of the preceding claims, the method comprising selectively connecting one or more of the plurality of inverters to the load in dependence on the power requirements of the load.
